# EUROPÄISCHE PATENTSCHRIFT

(11) **EP 3 658 766 B1**
(45) Veröffentlichungstag und Bekanntmachung des Hinweises auf die Patenterteilung: **16.12.2020**
(21) Anmeldenummer: 18739845.8
(22) Anmeldetag: 11.07.2018
(51) Int. Cl.: F03B 13/08, F16K 31/50, F16K 31/04

(54) **WASSERKRAFTANLAGE MIT EINEM ELEKTRISCHEN ANTRIEB ZUR BETÄTIGUNG DES EINLAUFVENTILS**
HYDROELECTRIC POWER PLANT WITH AN ELECTRIC DRIVE FOR ACTUATING THE INTAKE VALVE
CENTRALE HYDROÉLECTRIQUE AVEC VÉRIN ÉLECTRIQUE POUR ACTIONNER LA VANNE D'ADMISSION

(30) Priorität: 27.07.2017 DE 102017116968
(43) Veröffentlichungstag der Anmeldung: 03.06.2020
(73) Patentinhaber: Voith Patent GmbH, 89522 Heidenheim (DE)
(72) Erfinder: RICHTER, Peter, 89520 Heidenheim (DE)
(86) Internationale Anmeldenummer: PCT/EP2018/068753
(87) Internationale Veröffentlichungsnummer: WO 2019/020372

(56) Entgegenhaltungen:
- CN-A- 105 626 941
- JP-B2- H0 718 404
- JP-U- H0 685 981
- JP-U- S5 749 959

## Beschreibung

Die vorliegende Erfindung betrifft eine Wasserkraftanlage mit einem elektrischen Antrieb zur Betätigung des Einlaufventils, und ein Verfahren zum Betätigen eines solchen Einlaufventils.

Die meisten Wasserkraftanlagen besitzen aus Sicherheitsgründen ein Einlaufventil mit dessen Hilfe im Schadensfall die Anlage sicher außer Betrieb gesetzt werden kann. Herkömmlicherweise wird ein solches Einlaufventil mit Hilfe eines hydraulischen Servomotors und einem Hydraulikaggregat betätigt. Hierfür wird eine große Menge Hydrauliköl benötigt, das ein Risiko für die Umwelt darstellt. Zur Reduzierung dieses Risikos wurden Antriebe für Einlaufventile einer Wasserkraftanlage vorgeschlagen, die elektrisch betätigt werden. So offenbart die JPH02259283(A) einen elektrischen Antrieb zu Betätigung des Einlaufventils einer Wasserkraftanlage, welcher einen elektrischen Motor, ein Getriebe, einen Spindelgewindetrieb, einen Hebel und einen Gewicht umfasst. Der Hebel ist mit der Drehachse des Einlaufventils verbunden und trägt ein Gewicht, so dass das Einlaufventil mit Hilfe der Gewichtskraft geschlossen werden kann. Der elektrische Motor ist über das Getriebe mit dem Spindelgewindetrieb verbunden. Der Spindelgewindetrieb greift an den Hebel an, so dass der Hebel und das Gewicht mit Hilfe des elektrischen Motors gehoben und so das Einlaufventil geöffnet werden kann. Da der Spindelgewindetrieb keine Selbsthemmung besitzt, treibt das Gewicht beim Schließen den Motor über den Spindelgewindetrieb und das Getriebe an, der dabei als Generator wirkt. Über einen zuschaltbaren variablen Lastwiderstand kann so die Schließzeit des Einlaufventils kontrolliert werden, um einen Druckstoß beim Schließen des Einlaufventils zu vermeiden. Ferner umfasst die Anordnung noch eine Einrichtung zum Arretieren des Einlaufventils in der Geöffnet-Stellung, welche eine einigermaßen komplizierte Mechanik umfasst, die an den Hebel angreift. Die Arretierung kann mit Hilfe eines Elektromagneten entriegelt werden. Dazu ist es notwendig, dass ein elektrischer Strom durch den Elektromagneten fließt. Bei einem Stromausfall kann dies problematisch sein, d.h. es müssen hierzu z.B. Batterien vorgesehen sein, welche wiederum überwacht sein müssen, damit ein Schließen in jedem Fall sicher durchgeführt werden kann.

Die JP H06 85981 U offenbart eine Wasserkraftanlage, umfassend ein Oberwasserbecken, ein Unterwasserbecken, einen Wasserweg, der das Oberwasserbecken mit dem Unterwasserbecken verbindet, eine hydraulische Maschine, welche im Wasserweg angeordnet ist und den Wasserweg in zwei Teilstücke unterteilt, wobei eine Druckrohrleitung zwischen dem Oberwasserbecken und der hydraulischen Maschine angeordnet ist, und ein Einlassventil, welches in der Druckrohrleitung angeordnet ist, wobei das Einlassventil eine drehbar gelagerten Ventilkörper, einen am Ventilkörper angreifenden Hebel, ein am Hebel angeordnetes Gewicht, eine elektrisch ansteuerbare Arretierungseinheit zum Arretieren des Ventilkörpers und einen elektrischen Antrieb umfasst, wobei der Antrieb so ausgebildet ist, dass er das Einlassventil durch Heben und Senken des Gewichtes öffnen und schließen kann, und der Antrieb einen Antriebsstrang umfasst, welcher einen elektrischen Motor, ein Getriebe und einen Spindelgewindetrieb umfasst, welche so angeordnet sind, dass durch den Betrieb des Motors die Länge des Antriebs variiert werden kann, um das Gewicht zu heben und zu senken, wobei die Arretierungseinheit in den Antrieb integriert und so ausgebildet ist, dass sie den Antriebsstrang blockieren kann.

Der Erfinder hat sich die Aufgabe gestellt, einen alternativen elektrischen Antrieb zum Betätigen des Einlaufventils einer Wasserkraftanlage anzugeben, welcher einfacher aufgebaut ist und ein Schließen des Einlaufventils auch im Falle eines Stromausfalls sicher gewährleistet, ohne dass hierfür Batterien oder ähnliches vorgesehen werden müssen.

Der Erfinder hat erkannt, dass die gestellte Aufgabe durch eine Wasserkraftanlage mit den Merkmalen des Anspruchs 1 gelöst werden kann. Vorteilhafte Ausführungsformen ergeben sich aus den von Anspruch 1 abhängigen Unteransprüchen.

Die erfindungsgemäße Lösung wird nachfolgend anhand von Figuren erläutert. Darin ist im Einzelnen folgendes dargestellt:
- Figur 1: Wasserkraftanlage;
- Figur 2: Einlaufventil;
- Figur 3: Erfindungsgemäßer Antrieb zum Betätigen eines Einlaufventils.

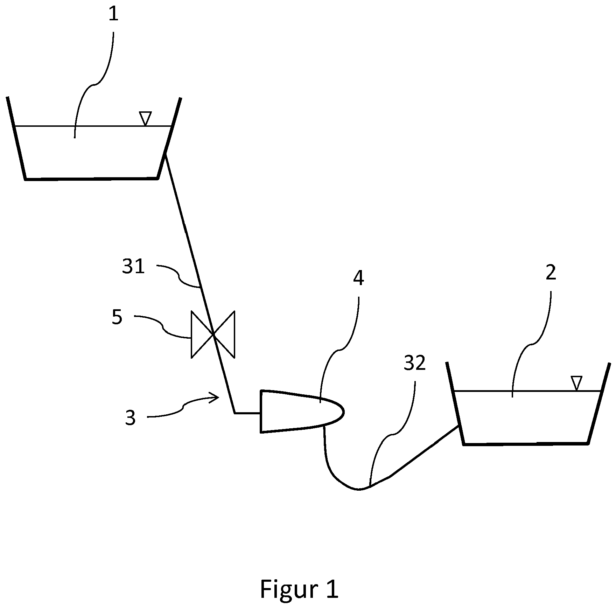

Figur 1 zeigt den schematischen Aufbau einer Wasserkraftanlage. Die Wasserkraftanlage umfasst ein Oberwasserbecken, welches mit 1 bezeichnet ist, und ein Unterwasserbecken, welches mit 2 bezeichnet ist, wobei der Wasserspiegel im Oberwasserbecken 1 über dem Wasserspiegel des Unterwasserbeckens 2 liegt. Bei den Becken 1 und 2 kann es sich auch um natürliche Gewässer wie beispielsweise Seen oder Flüsse handeln. Die Wasserkraftanlage umfasst ferner einen Wasserweg, welcher mit 3 bezeichnet ist und das Oberwasserbecken 1 mit dem Unterwasserbecken 2 verbindet. Im Wasserweg 3 ist eine hydraulische Maschine angeordnet, welche mit 4 bezeichnet ist. Dadurch wird der Wasserweg 3 in zwei Teilstücke geteilt. Der oberhalb der hydraulischen Maschine 4 gelegene Teil - die Druckrohrleitung - ist mit 31 bezeichnet, und der unterhalb der hydraulischen Maschine 4 gelegene Teil - das Saugrohr - ist mit 32 bezeichnet. Bei der hydraulischen Maschine 4 kann es sich um eine Turbine, eine Pumpe oder um eine Pumpturbine handeln. In der Druckrohrleitung 31 befindet sich ein Einlaufventil, das mit 5 bezeichnet ist.

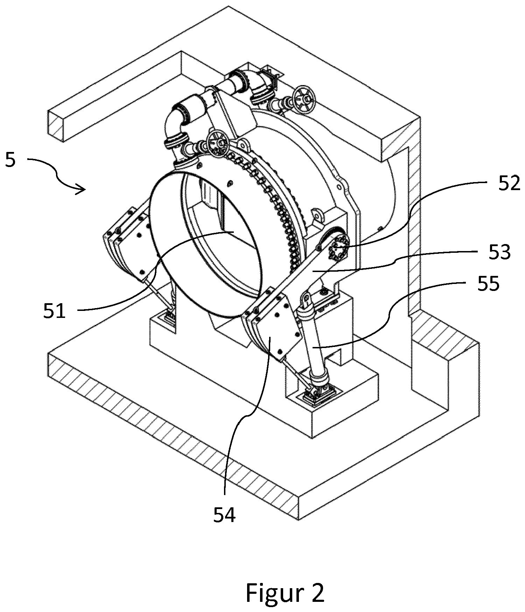

Figur 2 zeigt ein Einlaufventil 5. Das Einlaufventil 5 umfasst einen Ventilkörper, welcher mit 51 bezeichnet ist und drehbar um eine Achse gelagert ist, welche mit 52 bezeichnet ist. Durch Drehen des Ventilkörpers 51 um die Achse 52 kann das Einlaufventil 5 geöffnet und geschlossen werden. Dazu umfasst das Einlaufventil 5 wenigstens einen Hebel, welcher an dem Ventilkörper 51 angreift und mit 53 bezeichnet ist. Am Hebel 53 ist ein Gewicht angebracht, welches mit 54 bezeichnet ist. Hebel 53 und Gewicht 54 sind so ausgelegt, dass das Einlaufventil 5 allein durch die Gewichtskraft des Gewichts 54 sicher geschlossen werden kann. Natürlich ist es als äquivalent aufzufassen, wenn der Hebel 53 bereits so massiv ausgeführt ist, dass kein weiteres Gewicht 54 notwendig ist, um das Einlaufventil 5 zu schließen. Ferner umfasst das Einlaufventil 5 einen Antrieb zur Betätigung des Einlaufventils 5, welcher mit 55 bezeichnet ist. Der Antrieb 55 ist so gestaltet und mit dem Einlaufventil 5 verbunden, dass durch den Antrieb 55 das Gewicht 54 gehoben werden kann, um das Einlaufventil 5 zu öffnen. In Figur 2 greift der Antrieb 55 hierzu an den Hebel 53 an. Er könnte jedoch genauso gut am Gewicht 54 angreifen. Der Antrieb 55 ist so gestaltet, dass er zum Betätigen des Einlaufventils 5 seine Länge durch Ein- und Ausfahren verändern kann. In einem ersten Zustand - dem eingefahren Zustand - besitzt der Antrieb 55 eine vergleichsweise kurze Länge, so dass sich das Gewicht 54 soweit absenken kann, dass das Einlaufventil 5 geschlossen ist. In einem zweiten Zustand - dem ausgefahrenen Zustand - besitzt der Antrieb 55 eine vergleichsweise große Länge, so dass das Gewicht soweit angehoben ist, dass das Einlaufventil 5 geöffnet ist.

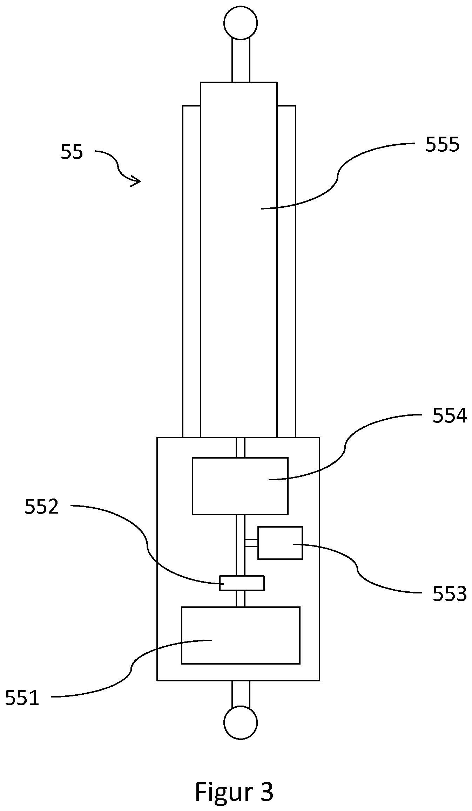

Figur 3 zeigt stark schematisch einen erfindungsgemäßen Antrieb 55. Der Antrieb 55 umfasst einen elektrischen Motor, welcher mit 551 bezeichnet ist, eine mechanische Bremse mit einstellbarer Bremskraft, welche mit 552 bezeichnet ist, eine Arretierungseinheit, welche mit 553 bezeichnet ist, ein Getriebe, welches mit 554 bezeichnet ist, und einen Spindelgewindetrieb ohne Selbsthemmung, welcher mit 555 bezeichnet ist. Der Motor 551 ist so mit dem Getriebe 554 und dem Spindelgewindetrieb 555 verbunden, dass durch ein Drehen des Motors 551 der Spindelgewindetrieb 555 die Länge des Antriebs zwischen den beiden Aufhängungspunkten, welche durch die beiden Kreise oben und unten in Figur 3 angedeutet sind, variieren kann. Die genannten Komponenten sind dabei so ausgelegt, dass die zum Heben des Gewichts 54 notwendige Kraft durch den Antrieb aufgebracht werden kann. Dabei wird das Getriebe 554 so wirken, dass die vom Motor 551 gelieferte Drehbewegung - relativ hohe Drehzahl bei relativ geringem Drehmoment - in eine Drehbewegung mit geringerer Drehzahl und höherem Drehmoment transformiert und auf den Spindelgewindetrieb 555 übertragen wird. Da der Spindelgewindetrieb 555 keine Selbsthemmung besitzt, genügt es zum Schließen des Einlaufventils den Motor strom- bzw. spannungslos zu schalten. Dabei dient die mechanische Bremse 552 mit einstellbarer Bremskraft dazu die Schließzeit des Einlaufventils einzustellen - je höher die Bremskraft desto länger ist die Schließzeit. Die Bremse 552 ist so angeordnet, dass sie die Drehbewegung des Antriebsstrangs innerhalb des Antriebs 55 hemmen kann. Um diesen Zweck zu erfüllen, kann sich die Bremse 552 an verschiedenen Stellen befinden, z.B. zwischen dem Motor 551 und dem Getriebe 552, wie in Figur 3 gezeigt, oder aber zwischen dem Getriebe 554 und dem Spindelgewindetrieb 555. Sie könnte auch in den Motor 551 integriert sein, oder sich innerhalb des Getriebes 554 befinden. Es ist jedoch von Vorteil, wenn die Bremse 552 an einer Stelle des Stranges hemmend angreift, die motorseitig des Getriebes 554 gelegen ist, da dort kleinere Bremskräfte ausreichen, um dem dortigen kleineren Drehmoment entgegen zu wirken. Der Antrieb 55 umfasst ferner einer elektrisch ansteuerbare Arretierungseinheit, welche mit 553 bezeichnet und so ausgelegt ist, dass sie in einem ersten Zustand die Drehbewegung des Antriebstranges komplett unterbinden und in einem zweiten Zustand die Drehbewegung komplett freigeben kann, wobei der erste Zustand eingenommen wird, wenn die Arretierungseinheit 553 ein elektrisches Signal empfängt, und der zweite Zustand eingenommen wird, wenn kein elektrisches Signal vorliegt. Bezüglich der Lage der Arretierungseinheit 553 gilt analog das bezüglich der Bremse 552 Gesagte. Es gibt viele mögliche Ausführungsformen, die für die Arretierungseinheit 553 geeignet sind. So kann es sich beispielsweise um eine ansteuerbare Bremse handeln, deren Bremskraft im geschlossen ersten Zustand so groß ist, dass die Gewichtskraft des Gewichts 54 nicht ausreicht um die Haftreibung der Bremse zu überwinden. Es könnte sich beispielsweise um eine Klinkenkonstruktion handeln, die in ein entsprechendes Zahnrad (z.B. im Getriebe) eingreift, um die Drehbewegung des Antriebstranges komplett zu unterbinden. Oder es könnte eine Vorrichtung mit einem ein- und ausfahrbaren Pin sein, der in eine entsprechende Öffnung z.B. in der Antriebswelle des Stranges, wie in Figur 3 angedeutet, oder in einem Rad des Getriebes 554 eingreift. Die beschriebene Funktionsweise der Ansteuerung der Arretierungseinheit 553 kann dabei beispielsweise jeweils durch das Zusammenspiel von Elektromagneten, Permanentmagneten und/oder mechanischen Federn erreicht werden. Der Zweck der Arretierungseinheit 553 besteht darin, dass im geöffneten Zustand des Einlaufventils 5, der Antrieb 55 blockiert werden kann, so dass der Motor 551 ausgeschaltet werden kann. Da sich das Einlaufventil 5 die meiste Zeit in diesem Zustand befindet, kann so Energie gespart werden, da die Arretierungseinheit 553 im blockierten ersten Zustand nur wenig elektrische Energie verbraucht. Andererseits ist durch die beschriebene Schaltlogik sichergestellt, dass bei einem Stromausfall die Arretierungseinheit 553 den zweiten Zustand einnimmt und dadurch den Antriebsstrang freigibt, so dass sich das Einlaufventil mit der über die Bremse eingestellten Schließzeit schließen kann. Im Gegensatz zum bekannten Antrieb aus der JPH02259283(A) erlaubt der Antrieb der vorliegenden Erfindung ein Arretieren des Ventilkörpers (51) in nahezu jeder beliebigen Drehstellung desselben. So kann z.B. das Einlaufventil auch im Geschlossen-Zustand blockiert werden, was z.B. die Sicherheit bei Wartungsarbeiten erhöht.

Beim Öffnen des Einlaufventils 5 wird die Zeit für das Öffnen durch die Drehzahl des Motors 551 geregelt. In der Regel wird dabei der Motor 551 mit konstanter Drehzahl laufen. Falls die Bremse 552 permanent hemmend in den Antriebsstrang eingreift, arbeitet der Motor dabei gegen die Bremskraft an. Optional kann der Energieverbrauch beim Öffnen reduziert werden, indem die Bremse 552 elektrisch gesteuert deaktiviert werden kann, d.h. in einem ersten Zustand greift die Bremse 552 mit der voreingestellten Bremskraft in den Antriebsstrang hemmend ein und in einem zweiten Zustand gibt die Bremse 552 den Antriebsstrang komplett frei. Dabei ist die Bremse 552 so gestaltet, dass der zweite Zustand eingenommen wird, wenn ein elektrisches Steuersignal anliegt, und der erste Zustand eingenommen wird, wenn kein elektrisches Steuersignal anliegt. Dadurch wird gewährleistet, dass auch bei einem Stromausfall das Schließen des Einlaufventils 5 mit der eingestellten Schließzeit sicher erfolgen kann. Alternativ kann die Bremse 552 auch so ausgeführt sein, dass sie nur in einer Drehrichtung des Antriebsstrangs hemmend in diesen eingreift. D.h. nur wenn sich der Antriebsstrang in Schließen-Richtung dreht (wobei sich das Gewicht 54 senkt) greift die Bremse 552 hemmend in den Antriebsstrang ein, und in der Öffnen-Richtung (wobei das Gewicht 54 gehoben wird) kann sich der Antriebsstrang ungehindert drehen.

Das Schließen des Einlaufventils 5 kann auf zwei Arten bewerkstelligt werden. Einmal durch Stromlos-Schalten des Motors 551 bei aktiver Bremse 552, oder durch Einfahren des Spindelgewindetriebs mit Hilfe des Motors 551. In beiden Fällen muss natürlich die Arretierungseinheit 553 den Antriebsstrang freigegen. Im zweiten Fall wird die Schließzeit über die Drehzahl des Motors 551 geregelt und die Bremse 552 kann ggf. deaktiviert sein, um Energie zu sparen.

Aus dem Gesagten wird klar, dass die Bremse 552 immer dann deaktiviert werden kann, wenn der Motor 551 arbeitet, d.h. unter Strom steht. Daher ist es besonders zweckmäßig, wenn eine ggf. steuerbare Bremse 552 in den Motor 551 integriert wird, da die Steuerung der Bremse 552 über die Stromversorgung des Motors 551 erfolgen kann. So werden weniger Bauteile benötigt und der Aufbau des Antriebs weiter vereinfacht.

Für den Spindelgewindetrieb 555 können Kugelgewindetriebe oder Planetenrollengewindetriebe verwendet werden, da diese über keine Selbsthemmung verfügen.

Es ist noch zu erwähnen, dass die Anordnung der einzelnen Komponenten in Figur 3 nur beispielhaft zu verstehen ist. Z.B. kann durch die Verwendung von geeigneten Kegelzahnrädern oder dergleichen der Antriebsstrang umgelenkt werden und so die Länge des Antriebs 55 verkürzt ausgeführt werden kann. Es ist jedoch immer die folgende Reihenfolge im Antriebsstrang gegeben: Motor 551, Getriebe 554, Spindelgewindetrieb 555.

## Patentansprüche

1. Wasserkraftanlage, umfassend ein Oberwasserbecken (1), ein Unterwasserbecken (2), einen Wasserweg (3), der das Oberwasserbecken (1) mit dem Unterwasserbecken (2) verbindet, eine hydraulische Maschine (4), welche im Wasserweg (3) angeordnet ist und den Wasserweg (3) in zwei Teilstücke (31, 32) unterteilt, wobei eine Druckrohrleitung (31) zwischen dem Oberwasserbecken (1) und der hydraulischen Maschine angeordnet ist, und ein Einlassventil (5), welches in der Druckrohrleitung (31) angeordnet ist, wobei das Einlassventil (5) einen drehbar gelagerten Ventilkörper (51), einen am Ventilkörper (51) angreifenden Hebel (53), ein am Hebel (53) angeordnetes Gewicht (54), eine elektrisch ansteuerbare Arretierungseinheit (553) zum Arretieren des Ventilkörpers und einen elektrischen Antrieb (55) umfasst, wobei der Antrieb (55) so ausgebildet ist, dass er das Einlassventil (5) durch Heben und Senken des Gewichtes (54) öffnen und schließen kann, und der Antrieb (55) einen Antriebsstrang umfasst, welcher einen elektrischen Motor (551), ein Getriebe (554) und einen Spindelgewindetrieb (555) in dieser Reihenfolge umfasst, welche so angeordnet sind, dass durch den Betrieb des Motors (551) die Länge des Antriebs (55) variiert werden kann, um das Gewicht (54) zu heben und zu senken, **dadurch gekennzeichnet, dass** die Arretierungseinheit (553) in den Antrieb (55) integriert und so ausgebildet ist, dass sie den Antriebsstrang blockieren kann, wenn ein elektrisches Steuersignal anliegt, und den Antriebsstrang frei geben kann, wenn kein elektrisches Steuersignal anliegt, und der Antrieb (55) ferner eine mechanische Bremse (552) mit einstellbarer Bremskraft umfasst, welche so ausgebildet ist, dass sie hemmend in den Antriebstrang eingreifen kann.

2. Wasserkraftanlage nach Anspruch 1, wobei die Bremse (552) motorseitig des Getriebes (554) angeordnet ist.

3. Wasserkraftanlage nach einen der Ansprüche 1 oder 2, wobei die Arretierungseinheit (553) motorseitig des Getriebes (554) angeordnet ist.

4. Wasserkraftanlage nach einem der Ansprüche 1 bis 3, wobei die Bremse (552) elektrisch ansteuerbar ausgeführt ist, so dass die Bremse (552) in einem ersten Zustand mit der voreingestellten Bremskraft in den Antriebsstrang hemmend eingreifen kann, und in einem zweiten Zustand den Antriebsstrang komplett freigeben kann, wobei der zweite Zustand eingenommen werden kann, wenn ein elektrisches Steuersignal anliegt, und der erste Zustand eingenommen werden kann, wenn kein elektrisches Steuersignal anliegt.

5. Wasserkraftanlage nach einem der Ansprüche 1 bis 3, wobei die Bremse (552) so ausgeführt ist, dass sie nur in derjenigen Drehrichtung des Antriebsstrangs hemmend in diesen eingreifen kann, bei der das Einlaufventil (5) geschlossen wird, und sich in der anderen Drehrichtung der Antriebsstrang ungehindert durch die Bremse (552) drehen kann.

6. Wasserkraftanlage nach einem der Ansprüche 1 bis 5, wobei die Bremse (552) in den Motor (551) integriert ausgeführt ist.

7. Wasserkraftanlage nach einem der Ansprüche 1 bis 6, wobei die Arretierungseinheit (553) in das Getriebe (554) integriert ausgeführt ist.

8. Wasserkraftanlage nach einem der Ansprüche 1 bis 7, wobei der Spindelgewindetrieb (555) als Kugelgewindetrieb ausgeführt ist.

9. Wasserkraftanlage nach einem der Ansprüche 1 bis 7, wobei der Spindelgewindetrieb (555) als Planetenrollengewindetrieb ausgeführt ist.

## Claims

1. Hydroelectric power plant comprising an upper water basin (1), a lower water basin (2), a water route (3) which connects the upper water basin (1) to the lower water basin (2), a hydraulic machine (4) which is arranged in the water route (3) and subdivides the water route (3) into two sections (31, 32), wherein a pressure pipeline (31) is arranged between the upper water basin (1) and the hydraulic machine, and an inlet valve (5) which is arranged in the pressure pipeline (31), wherein the inlet valve (5) comprises a rotatably mounted valve body (51), a lever (53) acting on the valve body (51), a weight (54) arranged on the lever (53), an electrically actuatable locking unit (553) for locking the valve body, and an electric drive (55), wherein the drive (55) is designed such that it can open and close the inlet valve (5) by raising and lowering the weight (54), and the drive (55) comprises a drivetrain comprising an electric motor (551), a gear mechanism (554) and a spindle thread drive (555) in this order, which are arranged such that, through the operation of the motor (551), the length of the drive (55) can be varied in order to raise and to lower the weight (54), **characterized in that** the locking unit (553) is integrated into the drive (55) and is designed such that it can block the drivetrain when an electrical control signal is present and can release the drivetrain when no electrical control signal is present, and the drive (55) furthermore comprises a mechanical brake (552) with a settable braking force, which is designed such that it can engage into the drivetrain with locking action.

2. Hydroelectric power plant according to Claim 1, wherein the brake (552) is arranged on the motor side of the gear mechanism (554).

3. Hydroelectric power plant according to either of Claims 1 and 2, wherein the locking unit (553) is arranged on the motor side of the gear mechanism (554) .

4. Hydroelectric power plant according to one of Claims 1 to 3, wherein the brake (552) is designed to be electrically actuatable such that the brake (552), in a first state, can engage with the preset braking force into the drivetrain with locking action, and, in a second state, can release the drivetrain completely, wherein the second state can be assumed when an electrical control signal is present, and the first state can be assumed when no electrical control signal is present.

5. Hydroelectric power plant according to one of Claims 1 to 3, wherein the brake (552) is designed such that only in that direction of rotation of the drivetrain in which the inlet valve (5) is closed can it engage into the latter with locking action, and, in the other direction of rotation, the drivetrain can rotate unhindered by the brake (552) .

6. Hydroelectric power plant according to one of Claims 1 to 5, wherein the brake (552) is designed so as to be integrated into the motor (551).

7. Hydroelectric power plant according to one of Claims 1 to 6, wherein the locking unit (553) is designed so as to be integrated into the gear mechanism (554) .

8. Hydroelectric power plant according to one of Claims 1 to 7, wherein the spindle thread drive (555) is designed in the form of a ball screw drive.

9. Hydroelectric power plant according to one of Claims 1 to 7, wherein the spindle thread drive (555) is designed in the form of a planetary roller screw drive.

## Revendications

1. Centrale hydroélectrique, comprenant un bassin d'eau supérieur (1), un bassin d'eau inférieur (2), une voie d'eau (3), qui relie le bassin d'eau supérieur (1) avec le bassin d'eau inférieur (2), une machine hydraulique (4), qui est agencée dans la voie d'eau (3) et divise la voie d'eau (3) en deux parties (31, 32), une canalisation sous pression (31) étant agencée entre le bassin d'eau supérieur (1) et la machine hydraulique, et une soupape d'admission (5), qui est agencée dans la canalisation sous pression (31), la soupape d'admission (5) comprenant un corps de soupape (51) monté rotatif, un levier (53) agissant sur le corps de soupape (51), un poids (54) agencé sur le levier (53), une unité d'arrêt (553) commandable électriquement pour l'arrêt du corps de soupape, et un entraînement électrique (55), l'entraînement (55) étant configuré de telle sorte qu'il puisse ouvrir et fermer la soupape d'admission (5) par levage et abaissement du poids (54), et l'entraînement (55) comprenant une ligne d'entraînement, qui comprend un moteur électrique (551), une transmission (554) et une vis d'entraînement à broches (555) dans cet ordre, qui sont agencés de telle sorte que la longueur de l'entraînement (55) puisse être variée par l'exploitation du moteur (551), afin de lever et d'abaisser le poids (54), **caractérisée en ce que** l'unité d'arrêt (553) est intégrée dans l'entraînement (55) et configurée de telle sorte qu'elle puisse bloquer la ligne d'entraînement lorsqu'un signal de commande électrique est appliqué et qu'elle puisse libérer la ligne d'entraînement lorsqu'aucun signal de commande électrique n'est appliqué, et l'entraînement (55) comprend en outre un frein mécanique (552) à force de freinage ajustable, qui est configuré de telle sorte qu'il puisse pénétrer dans la ligne d'entraînement de manière inhibitrice.

2. Centrale hydroélectrique selon la revendication 1, dans laquelle le frein (552) est agencé du côté moteur de la transmission (554).

3. Centrale hydroélectrique selon l'une quelconque des revendications 1 et 2, dans laquelle l'unité d'arrêt (553) est agencée du côté moteur de la transmission (554).

4. Centrale hydroélectrique selon l'une quelconque des revendications 1 à 3, dans laquelle le frein (552) est configuré sous forme commandable électriquement, de telle sorte que le frein (552) puisse pénétrer de manière inhibitrice dans la ligne d'entraînement dans un premier état avec la force de freinage ajustée au préalable, et puisse libérer complètement la ligne d'entraînement dans un deuxième état, le deuxième état pouvant être adopté lorsqu'un signal de commande électrique est appliqué, et le premier état pouvant être adopté lorsqu'aucun signal de commande électrique n'est appliqué.

5. Centrale hydroélectrique selon l'une quelconque des revendications 1 à 3, dans laquelle le frein (552) est configuré de telle sorte qu'il ne puisse pénétrer de manière inhibitrice dans la ligne d'entraînement que dans la direction de rotation de celle-ci dans laquelle la soupape d'admission (5) est fermée, et que la ligne d'entraînement puisse tourner dans l'autre direction de rotation sans être entravée par le frein (552).

6. Centrale hydroélectrique selon l'une quelconque des revendications 1 à 5, dans laquelle le frein (552) est configuré sous forme intégrée dans le moteur (551).

7. Centrale hydroélectrique selon l'une quelconque des revendications 1 à 6, dans laquelle l'unité d'arrêt (553) est configurée sous forme intégrée dans la transmission (554).

8. Centrale hydroélectrique selon l'une quelconque des revendications 1 à 7, dans laquelle la vis d'entraînement à broches (555) est configurée sous la forme d'une vis d'entraînement à billes.

9. Centrale hydroélectrique selon l'une quelconque des revendications 1 à 7, dans laquelle la vis d'entraînement à broches (555) est configurée sous la forme d'une vis d'entraînement à rouleaux planétaires.
